# DEMANDE DE BREVET EUROPEEN

(11) **EP 0 524 084 A1**
(43) Date de publication de la demande: **20.01.1993**
(21) Numéro de dépôt: 92402033.2
(22) Date de dépôt: 15.07.1992
(51) Int. Cl.: H01R 41/00, H02G 5/04

(54) **Gaine d'alimentation électrique, notamment pour chariot de pont-roulant ou de palan, et chariot mobile de captation associé à ladite gaine**

(30) Priorité: 17.07.1991 FR 9109033
(71) Demandeur: Delachaux S.A., F-92231 GennevilliersCédex (FR)
(72) Inventeur: Pelletier, Yves, F-95000 Cergy (FR); Dumontet, Max, F-93500 Pantin (FR)
(74) Mandataire: Martin, Jean-Jacques

(57) **Abrégé**

L'invention concerne une gaine d'alimentation électrique comportant au moins un profilé de gaine supportant une pluralité de conducteurs en bande agencés pour être contactés par des frotteurs associés portés par un chariot mobile de captation.

Selon l'invention, le profilé de gaine (100) est réalisé sous la forme d'une poutre présentant en section un contour fermé, à l'extérieur de laquelle sont organisées des rainures longitudinales (103) au fond de chacune desquelles est disposé un conducteur en bande (105, 105′), ainsi que deux nervures (106, 107) formant les chemins de roulement dudit chariot.

Application notamment aux gaines d'alimentation électrique pour chariot mobile de pont-roulant ou de palan électrique.

## Description

L'invention concerne les gaines d'alimentation électrique pour dispositifs mobiles glissants à moteur électrique, et notamment pour chariot de pont-roulant ou de palan électrique.

D'une façon générale, les gaines d'alimentation électrique connues comportent au moins un profilé de gaine supportant une pluralité de conducteurs en bande disposés parallèlement à la direction générale dudit profilé, lesdits conducteurs étant agencés pour être contactés par des frotteurs associés portés par un chariot mobile de captation pouvant rouler sur des chemins de roulement solidaires dudit profilé.

Les profilés de gaine que l'on rencontre présentent en section la forme d'un U tourné vers le bas, avec des conducteurs en bande disposés du côté intérieur, sur les faces latérales et/ou sur la face supérieure de chaque profilé, et avec des nervures ou des retours tournés vers le plan médian des profilés de gaine pour constituer des chemins de roulement pour le chariot mobile de captation qui roule à l'intérieur desdits profilés.

Selon un premier type de réalisation, les profilés de gaine sont réalisés en matière plastique, notamment en polychlorure de vinyle, et présentent des rainures longitudinales en forme de queue d'aronde et agencées parallèlement à la direction générale des profilés, avec par exemple deux rainures larges sur la face intérieure de chaque aile, et trois rainures plus étroites sur la face intérieure de la branche centrale. Ces rainures reçoivent chacune un conducteur en bande, en général en cuivre, qui est contacté par un frotteur porté par le chariot mobile de captation qui se déplace à l'intérieur de la gaine qui est constituée par des tronçons, par exemple de cinq ou six mètres de long, éclissés bout à bout par boulonnage. Le câble pendant du chariot passe alors par une fente centrale de la gaine, délimitée par deux nervures horizontales tournées vers l'intérieur et se faisant face, lesdites nervures formant les chemins de roulement pour les galets du chariot mobile de captation.

Une telle conception, par exemple illustrée dans le brevet français N° 2 547 465, présente en fait plusieurs inconvénients.

Tout d'abord, le fait que tous les conducteurs en bande soient disposés du côté intérieur de la gaine empêche de voir les surfaces de contact, de sorte qu'il est impossible de prévoir un incident risquant d'entraîner un court-circuit et une panne du système.

De plus, lorsqu'il est nécessaire de réaliser une gaine d'alimentation électrique de grande longueur, par exemple cinquante mètres, il est nécessaire d'organiser un éclissage entre les conducteurs en bande adjacents, et ce pour chacun d'eux, ce qui suppose l'utilisation de plusieurs vis au niveau de chaque jonction entre profilés de gaine adjacents mis bout à bout : outre la difficulté d'accès (l'éclissage se faisant par l'intérieur), les opérations de montage ou de démontage sont longues et fastidieuses. Dans certains cas, on cherche à disposer des conducteurs en bande continus communs à plusieurs profilés de gaine mis bout à bout, afin d'éviter la multiplicité des éclissages entre conducteurs, mais la mise en place de tels conducteurs continus est dans la pratique difficile et délicate, du fait de l'accessibilité très limitée de l'intérieur des profilés de gaine.

En outre, la mise en place du chariot mobile de captation est difficile à réaliser, car les deux extrémités de la gaine d'alimentation électrique sont fermées pour des raisons de sécurité électrique : il est donc nécessaire de prévoir une pièce spéciale démontable formant une ouverture latérale dans la gaine, afin d'introduire le chariot mobile de captation, ce qui allonge les temps d'opérations et augmente le coût de fabrication de la gaine.

Enfin, la rigidité des profilés de gaine reste limitée, de sorte que le chariot peut parfois se coincer, ou même sortir de la gaine par suite d'un effort latéral important exercé sur le câble suspendu.

Selon une variante de la réalisation précédente, les profilés de gaine présentent, toujours du côté intérieur, des nervures longitudinales en forme de queue d'aronde, par exemple deux nervures sur la face intérieure de chaque aile, et une nervure sur la face intérieure de la branche centrale. Dans ce cas, les conducteurs en bande ne sont pas plats, mais présentent une section en forme de C pour un accrochage du type clipsage sur les nervures en queue d'aronde.

Outre les inconvénients précités (conducteurs masqués, éclissage des conducteurs, difficulté de mise en place du chariot mobile de captation, rigidité limitée de la gaine), une telle conception est onéreuse en raison de la forme spéciale des conducteurs en bande, et la pose de ces conducteurs est délicate (a fortiori si l'on cherche à utiliser des conducteurs communs à plusieurs profilés de gaine mis bout à bout).

Selon une autre variante, les profilés de gaine présentent, toujours du côté intérieur, des nervures longitudinales dont les bords forment des bourrelets, par exemple deux nervures sur la face intérieure de chaque aile. Comme pour la variante précédente, il est nécessaire de prévoir des conducteurs en bande de forme spéciale, par exemple en forme de huit, pour un clipsage des conducteurs entre les bourrelets des nervures associées, d'où un coût élevé et un montage particulièrement délicat (notamment en raison de la rigidité importante des conducteurs en bande). La section des profilés de gaine est alors toutefois légèrement modifiée, les ailes du U présentant en effet un bombement vers l'extérieur, de façon à définir un passage bien délimité pour les galets du chariot mobile de captation, les parties bombées revenant enfin vers l'intérieur pour définir une fente de passage qui doit être aussi étroite que possible pour la protection électrique. Les avantages d'une meilleure délimitation entre la partie captation et la partie roulement sont cependant largement contrebalancés par les inconvénients déjà mentionnés (conducteurs masqués, éclissage des conducteurs, difficulté de mise en place du chariot mobile de captation, et rigidité limitée de la gaine).

Selon un autre type de réalisation, plus récent, les profilés de gaine présentent une section en U dont la branche centrale est plus large que pour les profilés précédents, cette branche centrale portant seule, du côté intérieur, les conducteurs en bande. La branche centrale présente à cet effet des rainures longitudinales profondes, par exemple au nombre de quatre, au fond de chacune desquelles est disposé un conducteur plat en bande. Les deux ailes du profilé de gaine se présentent alors sous la forme d'une paroi mince et lisse (puisqu'elles ne supportent aucun conducteur en bande), ce qui facilite la mise en place du chariot mobile de captation en écartant les ailes d'un profilé de gaine, pour dégager les deux nervures transversales d'extrémité tournées vers l'intérieur qui forment chemins de roulement pour ledit chariot. L'accès aux conducteurs en bande est donc plus dégagé par rapport aux conceptions précédentes, grâce à la largeur importante de la fente longitudinale, mais cet accès ne peut toutefois se faire que par l'intérieur (conducteurs masqués) ; il faut cependant noter que l'accès aux conducteurs est par ailleurs protégé, grâce au dimensionnement choisi des rainures profondes, ce qui assure une protection électrique satisfaisante. Un profilé de gaine de ce type est par exemple illustré dans le brevet français N° 2 578 109.

Avec un tel profilé de gaine, les conducteurs en bande peuvent être enfilés en bout plus facilement, grâce à la largeur de la fente centrale, ce qui rend possible l'utilisation de conducteurs en bande continus communs à plusieurs profilés de gaine mis bout à bout. Toutefois, si l'on préfère avoir des profilés de gaine "autonomes", c'est-à-dire portant leurs propres longueurs de conducteurs en bande, on ne peut échapper à l'emploi d'un éclissage traditionnel, avec les inconvénients déjà cités plus haut pour le remplacement d'un tronçon individuel de gaine. Par ailleurs, on retrouve encore l'inconvénient d'une rigidité limitée des profilés de gaine.

L'état de la technique est encore illustré par le brevet américain N° 3 980 368 et le brevet suisse N° 481 504.

L'invention a pour objet de réaliser une gaine d'alimentation électrique plus performante que les gaines précitées, et en particulier procurant une accessibilité aisée et protégée aux conducteurs en bande, tout en facilitant la mise en place du chariot mobile de captation dont la conception particulière, adaptée à la gaine, fait également partie de l'invention.

L'invention a aussi pour objet de réaliser une gaine d'alimentation électrique dont les profilés sont équipés de moyens performants de jonction et d'éclissage, particulièrement bien adapté pour permettre le remplacement aisé et rapide d'un tronçon de gaine individuel, pour le cas où l'on préfère utiliser des profilés de gaine autonomes, la structure de la gaine permettant toutefois l'utilisation de conducteurs de bande continus communs à plusieurs profilés mis bout à bout.

L'invention a encore pour objet de réaliser une gaine d'alimentation électrique présentant une rigidité élevée, évitant tout risque de coincement ou de dégagement hors de la gaine d'alimentation pour le chariot mobile de captation.

Il s'agit plus particulièrement d'une gaine d'alimentation électrique, notamment pour chariot mobile de pont-roulant ou de palan, comportant au moins un profilé de gaine en matériau électriquement isolant, supportant une pluralité de conducteurs en bande disposés parallèlement à la direction générale dudit profilé, lesdits conducteurs étant agencés pour être contactés par des frotteurs associés portés par un chariot mobile de captation pouvant rouler sur des chemins de roulement solidaires dudit profilé, caractérisée par le fait que le profilé de gaine est réalisé sous forme d'une poutre présentant en section un contour fermé, à l'extérieur de laquelle sont organisées d'une part une pluralité de rainures longitudinales au fond de chacune desquelles est disposé un conducteur en bande, la largeur et la profondeur desdites rainures longitudinales étant choisies pour permettre à la fois le passage des frotteurs du chariot mobile de captation et la protection des conducteurs en bande, et d'autre part deux nervures formant les chemins de roulement dudit chariot.

De préférence, chaque profilé de gaine comporte des rainures longitudinales associées aux conducteurs de phase sur ses faces latérales ; en particulier, chaque profilé de gaine comporte une rainure longitudinale supplémentaire, également du côté extérieur, associée au conducteur de terre, ladite rainure étant de préférence disposée au niveau de la face inférieure dudit profilé.

Avantageusement, les rainures longitudinales ont la forme générale d'un T, dont la branche centrale sert au passage du frotteur associé et dont la branche transversale sert au logement du conducteur en bande correspondant.

De préférence alors, la branche transversale de certaines au moins des rainures en forme de T est dimensionnée pour recevoir des conducteurs en bande d'épaisseurs différentes ; en variante, la branche transversale de certaines au moins des rainures en forme de T présente un profil étagé, de façon à recevoir des conducteurs en bande de largeurs et d'épaisseurs différentes.

Il est par ailleurs intéressant que chaque profilé de gaine présente, à ses extrémités libres, une encoche au niveau de ses portions de paroi associées aux rainures longitudinales, de façon à pouvoir recourber les extrémités des conducteurs en bande et amener les extrémités recourbées desdits conducteurs en bande le long desdites portions de paroi, du côté intérieur par rapport au contour fermé dudit profilé de gaine.

Avantageusement alors, le profilé de gaine présente, du côté intérieur par rapport à son contour fermé, des paires de nervures en arrière des rainures longitudinales, chaque paire de nervures formant butées de positionnement pour les extrémités recourbées du conducteur en bande associé ; en particulier, les nervures voisines de deux paires adjacentes sont reliées par un contour brisé, de façon à augmenter la ligne de fuite entre les extrémités recourbées concernées des conducteurs en bande adjacents.

De préférence, chaque profilé de gaine présente un capotage de protection s'étendant de part et d'autre d'un plan médian dudit profilé, de façon à protéger les rainures longitudinales contre les poussières et/ou le ruissellement d'eau.

En variante, chaque profilé de gaine est agencé pour recevoir, de chaque côté d'un plan médian dudit profilé, un capotage clipsé qui se prolonge latéralement vers le bas pour envelopper la portion supérieure du chariot mobile de captation comportant les frotteurs latéraux.

Il est également possible de prévoir que chaque profilé de gaine présente supérieurement deux nervures saillantes à bord libre recourbé, de façon à définir deux chemins de roulement pour des galets de guidage latéral, lesdits galets, d'axe vertical, étant portés par le chariot mobile de captation.

Il est également intéressant que chaque profilé de gaine présente inférieurement deux nervures saillantes, s'étendant de part et d'autre d'un plan médian dudit profilé, et dans une direction parallèle à la direction d'entrée des rainures longitudinales dudit profilé, pour constituer les chemins de roulement du chariot mobile de captation ; en particulier, chaque nervure saillante est surmontée d'une paroi saillante, de façon à définir deux couloirs parallèles pour les galets du chariot, les largeurs desdits couloirs étant différentes pour former un détrompeur au montage dudit chariot.

Selon un mode particulier, chaque profilé de gaine a la forme d'une poutre de section rectangulaire. On pourra en variante prévoir une section différente à contour fermé, notamment une section carrée triangulaire, ou plus généralement polygonale. En particulier, chaque profilé de gaine a la forme d'une poutre de section triangulaire, dont la pointe est tournée vers le bas, les portions de paroi associées aux rainures longitudinales latérales étant alors inclinées par rapport au plan médian dudit profilé, et les frotteurs du chariot étant agencés selon deux directions obliques et symétriquement par rapport audit plan médian.

Selon une première variante, la gaine d'alimentation électrique est constituée d'une pluralité de profilés de gaine mis bout à bout, chaque conducteur en bande porté par lesdits profilés étant continu sur toute la longueur de ladite gaine.

Selon une autre variante, la gaine d'alimentation électrique est constituée d'une pluralité de profilés de gaine mis bout à bout, avec des blocs de jonction pour assurer la continuité électrique de l'ensemble des conducteurs en bande entre profilés de gaine adjacents, lesdits blocs étant logés à l'intérieur desdits profilés de gaine.

De préférence alors, chaque bloc de jonction présente extérieurement des lames de contact cintrées associées à chaque conducteur en bande porté par les profilés de gaine adjacents concernés.

Il est également avantageux que chaque bloc de jonction assure également un éclissage mécanique des profilés de gaine concernés.

Avantageusement alors, chaque bloc de jonction et d'éclissage présente supérieurement deux manchons taraudés pour une fixation par vissage à chacun des deux profilés de gaine concernés, la zone de jonction étant recouverte par un capotage amovible ; en particulier, chaque profilé de gaine présente, à une extrémité, un trou rond pour le passage d'une vis de fixation, et, à l'autre extrémité, une lumière allongée pour le passage d'une autre vis de fixation, de façon à autoriser un coulissement des blocs de jonction et d'éclissage en vue du démontage d'un profilé de gaine individuel.

L'invention concerne également un chariot mobile de captation associé à une gaine d'alimentation électrique présentant l'une au moins des caractéristiques précitées, ledit chariot étant constitué par des joues latérales fixées à une pièce centrale passant sous la gaine d'alimentation, chaque joue portant des frotteurs saillant en direction des conducteurs en bande associés portés par ladite gaine, ainsi que des galets de roulement associés aux chemins de roulement que présente ladite gaine, et la pièce centrale portant un frotteur saillant en direction d'un conducteur de terre porté par ladite gaine.

De préférence alors, lorsque le chariot mobile de captation est associé à une gaine ayant la forme d'une poutre de section rectangulaire, les joues sont assemblées à la pièce centrale selon une direction transversale, les frotteurs associés étant agencés parallèlement à cette direction et symétriquement par rapport à un plan médian de ladite gaine.

D'autres caractéristiques et avantages de l'invention apparaîtront plus clairement à la lumière de la description qui va suivre et des dessins annexés, concernant un mode de réalisation particulier, en référence aux figures où :
- la figure 1 est une coupe transversale illustrant une gaine d'alimentation électrique conforme à l'invention, avec ses conducteurs en bande, le chariot mobile de captation étant seulement schématisé par ses galets de roulement représentés en traits mixtes, et un seul frotteur étant (partiellement) représenté en face de la rainure au fond de laquelle est disposé le conducteur en bande associé ;
- la figure 2 est une vue en perspective permettant de mieux distinguer l'extrémité d'un profilé de gaine selon la figure 1, les conducteurs plats en bande n'étant toutefois pas représentés pour mieux voir les encoches ou embrèvements qui permettent de recourber vers l'intérieur les extrémités de ces conducteurs en bande ;
- la figure 3 est un détail illustrant en coupe une variante de la géométrie des rainures longitudinales en forme de T, avec un profil étagé ;
- la figure 4 est une coupe illustrant une variante de la section illustrée en figure 1, sans les conducteurs en bande associés ;
- la figure 5 est une vue partielle en coupe longitudinale, au niveau de la zone de contact entre deux profilés de gaine adjacents mis bout à bout, dans le cas particulier où l'on utilise des extrémités recourbées vers l'intérieur pour les conducteurs en bande, la figure permettant également de distinguer un bloc de jonction ;
- la figure 6 est une coupe verticale de la zone de la figure 5, permettant de mieux distinguer l'agencement du bloc précité, qui sert à la fois à la jonction assurant la continuité électrique et à l'éclissage mécanique entre profilés de gaine ;
- la figure 7 est une vue en perspective du bloc précité de jonction et d'éclissage ;
- la figure 8 est une coupe selon VIII-VIII de la figure 6 ;
- la figure 9 est une vue en coupe de la gaine de la figure 1, avec le chariot mobile de captation associé tel qu'assemblé ;
- la figure 10 est une vue de dessous du chariot mobile de captation ;
- la figure 11 est une vue de dessus de la partie centrale du chariot ;
- les figures 12 et 13 sont des vues respectivement extérieure et intérieure de l'une des deux joues latérales du chariot, avec la figure 14 qui est une coupe selon XIV-XIV de la figure 13 ;
- la figure 15 est une coupe illustrant une autre variante de la section illustrée en figure 1, avec un double capotage de protection clipsé sur le profilé de gaine, et un guidage latéral par galets en partie haute du chariot mobile de captation ;
- la figure 16 illustre en coupe encore une autre variante, selon laquelle le profilé de gaine a la forme d'une poutre de section triangulaire.

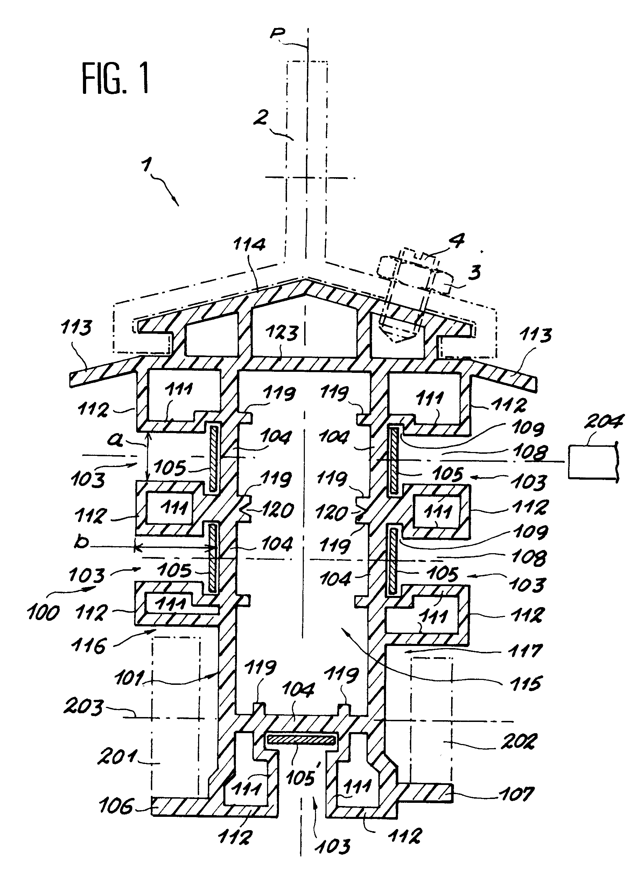

La figure 1 illustre en coupe une gaine d'alimentation électrique 1 conforme à l'invention, une telle gaine pouvant convenir pour tout dispositif mobile glissant à moteur électrique, et notamment pour un chariot de pont roulant ou de palan électrique. La gaine 1 comporte au moins un profilé de gaine 100 supportant une pluralité de conducteurs en bande 105, 105′ disposés parallèlement à la direction générale dudit profilé, lesdits conducteurs étant agencés pour être contactés par des frotteurs associés (ici une portion d'un tel frotteur 204 est seulement illustrée) portés par un chariot mobile de captation (dont on distingue ici seulement les galets de roulement 201, 202) pouvant rouler sur des chemins de roulement solidaires dudit profilé. Le ou les profilés de gaine 100 sont supportés par des griffes de suspension 2, par exemple réalisées en aluminium, et pouvant assurer un glissement relatif de la gaine. Il est avantageux de prévoir sur les griffes de suspension 2 un moyen d'ancrage évitant tout coulissement du profilé de gaine une fois celui-ci mis en place : en l'espèce, ce moyen est réalisé sous la forme d'une courte vis 4, bloquée par un écrou 3, et pénétrant en partie supérieure du profilé de gaine 100.

Conformément à un aspect essentiel de l'invention, le profilé de gaine 100 est réalisé sous la forme d'une poutre en un matériau électriquement isolant tel qu'une matière plastique, et par exemple en polychlorure de vinyl, présentant en section un contour fermé 101, à l'extérieur de laquelle sont organisées d'une part une pluralité de rainures longitudinales 103 au fond de chacune desquelles est disposé un conducteur en bande 105, 105′, la largeur a et la profondeur b desdites rainures longitudinales étant choisies pour permettre à la fois le passage des frotteurs 204 du chariot mobile de captation et la protection des conducteurs en bande 105, 105′, et d'autre part deux nervures 106, 107 formant les chemins de roulement dudit chariot.

Ainsi que cela est aisé à comprendre, l'accessibilité des conducteurs en bande 105, 105′ est organisée par l'extérieur de la gaine, ce qui procure de multiples avantages. Tout d'abord, les conducteurs en bande 105, 105′ sont visibles de l'extérieur, ce qui permet de détecter à temps toute trace d'étincelage ou toute usure anormale des frotteurs. De plus, les conducteurs en bande 105, 105′ peuvent être aisément réalisés sous la forme d'une bande continue de grande longueur concernant plusieurs profilés de gaine mis bout à bout, car il suffit de tirer chaque conducteur inséré dans la portion correspondante de la rainure longitudinale associée, jusqu'à sa position finale, ce qui peut être aisément réalisé par un outil quelconque, par l'extérieur, supprimant ainsi les éclissages des conducteurs en bande. Il est également possible de réaliser un profilé de gaine équipé individuellement de ses conducteurs en bande, le maintien de ces conducteurs pouvant être alors assuré par un retournement des extrémités des conducteurs vers l'intérieur du profilé, ainsi que cela sera décrit plus loin.

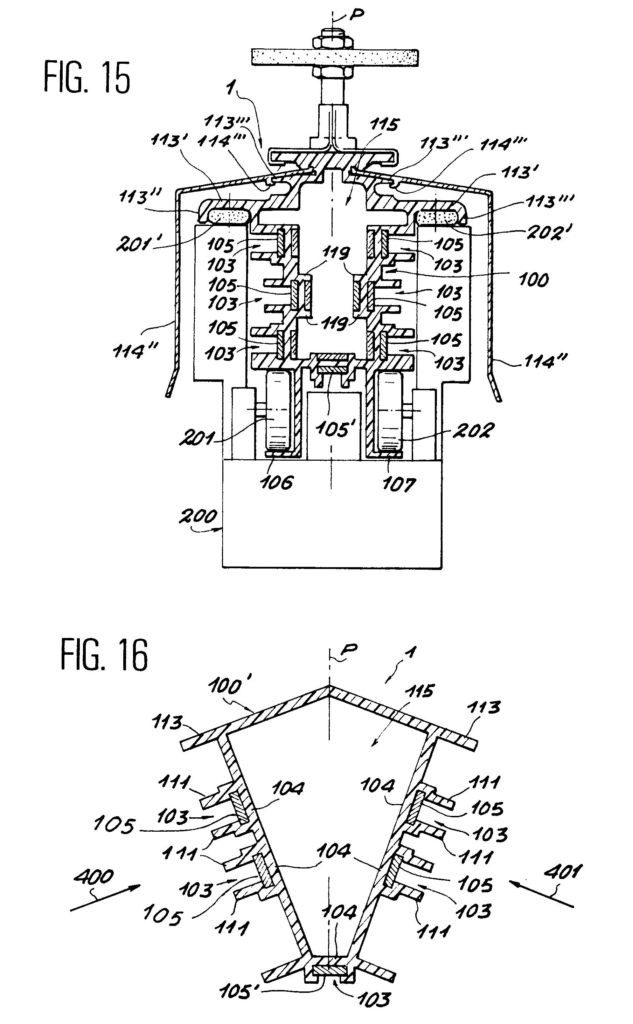

Le fait que le profilé de gaine 100 soit réalisé sous la forme d'une poutre présentant en section un contour fermé procure une rigidité élevée, ce qui évite toute déformation risquant de gêner le roulement normal du chariot mobile de captation, ledit chariot ne pouvant par ailleurs pas s'échapper de la gaine d'alimentation. Le profilé de gaine 100 illustré sur la figure 1 a la forme d'une poutre de section rectangulaire, mais il va de soi que l'on pourra prévoir une section différente à contour fermé, notamment une section carrée ou triangulaire (comme c'est le cas pour la figure 16), ou plus généralement polygonale.

Le profilé de gaine 100 comporte ici des rainures longitudinales 103 associées aux conducteurs de phase 105 sur ses faces latérales, à l'extérieur de celles-ci. Il comporte également une rainure longitudinale supplémentaire 103, également du côté extérieur, ici disposée au niveau de la face inférieure du profilé de gaine 100, cette rainure supplémentaire étant associée au conducteur de terre 105′. Il va de soi cependant que le nombre et l'agencement des rainures longitudinales associées aux conducteurs en bande pourront différer de ce qui est illustré sur la figure 1. La disposition illustrée présente cependant des avantages importants, dans la mesure où elle permet de réaliser de façon simple et rationnelle l'assemblage du chariot mobile de captation, ainsi que cela sera décrit plus loin, les frotteurs 204 étant alors portés par des joues latérales du chariot, lesquelles sont rapprochées l'une de l'autre, dans une direction transversale, c'est-à-dire sensiblement perpendiculairement au plan médian P de la gaine, pour un assemblage sur une portion centrale inférieure, chaque frotteur 204 pénétrant alors dans la rainure longitudinale 103 associée. Le même avantage se retrouve pour le positionnement des galets de roulement 201 et 202 du chariot, portés par leur joue respective, dans la mesure où les couloirs 116 et 117 associés à ces galets débouchent directement sur l'extérieur.

Les rainures longitudinales 103 ont ici la forme générale d'un T, dont la branche centrale 108 sert au passage du frotteur associé 204, et dont la branche transversale 109 sert au logement du conducteur en bande correspondant 105 ou 105′. La largeur a de chacune des rainures longitudinales 103 est choisie suffisante pour laisser passer le frotteur 204 associé, et suffisamment faible pour interdire le passage d'un doigt, pour une protection électrique suffisante (en particulier une protection du type IP2, conforme à la norme française NFC 20010). La profondeur b des rainures longitudinales 103 est quant à elle choisie suffisante pour assurer une excellente protection des conducteurs en bande 105, 105′. Les rainures 103 sont ici délimitées par des parois parallèles 111, parois qui sont, sur la variante de la figure 1, réunies par des parois de raidissement 112. La paroi supérieure 111 de chaque rainure 103 est orientée perpendiculairement au plan médian P, et joue ainsi le rôle d'un toit de protection pour les conducteurs en bande 105. Pour ce qui est de la rainure longitudinale 103 associée au conducteur de terre 105′, cette protection est d'ores et déjà assurée par l'agencement même de cette rainure, dont la géométrie est par ailleurs identique à celle des autres rainures 103. Il pourra d'ailleurs s'avérer avantageux d'améliorer encore la protection des conducteurs de phase 105 en prévoyant un capotage de protection 113 s'étendant de part et d'autre du plan médian P, de façon à protéger les rainures longitudinales 103 contre les poussières et/ou le ruissellement d'eau.

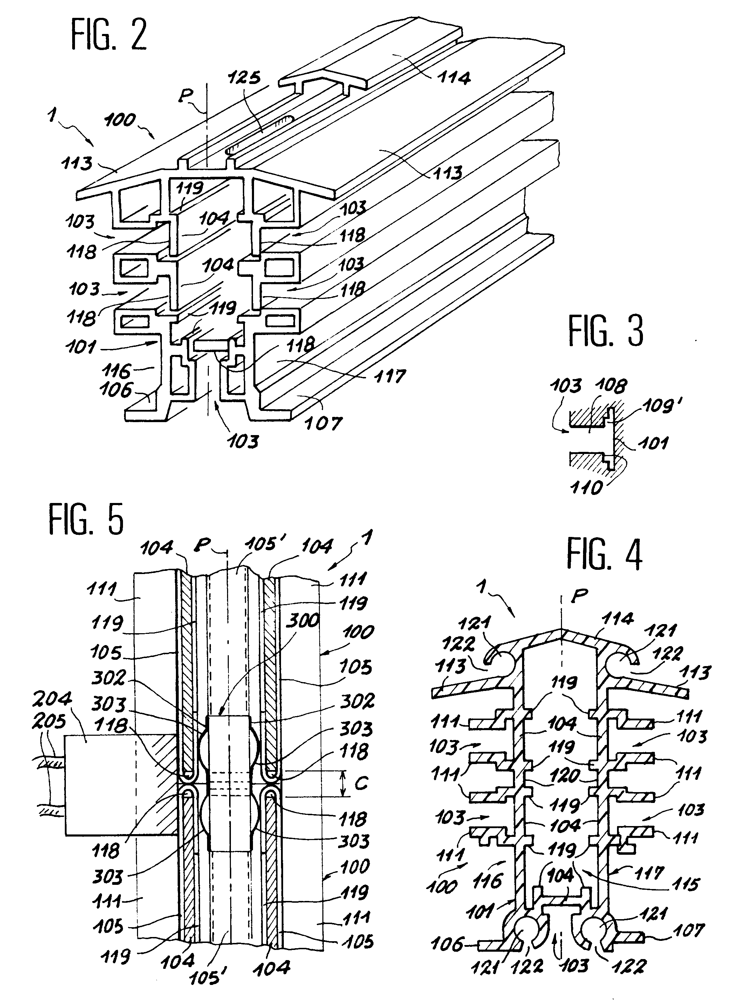

Ainsi que cela est visible sur la figure 1, la branche transversale 109 de chaque rainure en forme de T 103 présente une profondeur supérieure à l'épaisseur du conducteur en bande 105 : cette représentation vise à faire comprendre que l'on pourra utiliser des conducteurs en bande d'épaisseurs différentes, par exemple de 1 mm pour un calibre de 40 Ampères à 3,5 mm pour un calibre de 140 Ampères, avec un feuillard de cuivre ou d'acier de 10 mm de large. En variante, ainsi que cela est illustré sur la figure 3, la branche transversale 109′ de certaines au moins des rainures en forme de T 103 peut présenter un profil étagé 110, de façon à recevoir des conducteurs en bande 105 ou 105′ de largeurs et d'épaisseurs différentes. Il convient cependant d'observer que chaque conducteur en bande 105 ou 105′ reste maintenu au fond de sa rainure longitudinale associée par le frotteur correspondant ; cependant, dans le cas de gaines de grandes longueurs, il est intéressant de prévoir que les conducteurs en bande sont correctement positionnés au fond de leurs rainures longitudinales respectives, afin d'éviter tout bombement local des conducteurs, ce qui justifie l'intérêt de la variante illustrée sur la figure 3.

Ainsi que cela est mieux visible sur la figure 2, chaque profilé de gaine 100 présente ici, à ses extrémités libres, une encoche ou embrèvement 118 au niveau de ses portions de parois 104 associées aux rainures longitudinales 103. Ce moyen permet de recourber les extrémités des conducteurs en bande 105 ou 105′ à chacune des deux extrémités d'un profilé de gaine individuel 100, en amenant les extrémités recourbées desdits conducteurs en bande le long des portions de parois 104 correspondant aux fonds des rainures longitudinales 103, du côté intérieur par rapport au contour fermé 101 dudit profilé de gaine. Les extrémités recourbées de conducteurs en bande 105, avec contournement des parois 104 au niveau des encoches ou embrèvements 118, sont mieux visibles sur la coupe de la figure 5. De telles encoches 118 permettent ainsi un contact bord à bord des profilés de gaine 100, de façon à assurer la continuité des pistes de roulement 106, 107, et permet également de définir un jeu entre le bord libre des parois 104 et la partie incurvée des conducteurs en bande, pour tenir compte des dilatations différentielles entre le matériau du profilé et le matériau des conducteurs en bande. Il est alors intéressant que le profilé de gaine 100 présente, du côté intérieur par rapport à son contour fermé 101, des paires de nervures 119 en arrière des rainures longitudinales 103, chaque paire de nervures formant butées de positionnement pour les extrémités recourbées du conducteur en bande associé 105 ou 105′. Ces nervures 119 sont visibles sur la coupe de la figure 1, et l'on peut constater que, pour chacune des parois latérales du profilé de gaine, les nervures voisines de deux paires adjacentes sont reliées par un contour brisé 120 (ici en forme de V), de façon à augmenter la ligne de fuite entre les extrémités recourbées (non visibles sur la figure 1) des conducteurs en bande adjacents 105.

Chaque profilé de gaine 100 présente inférieurement deux nervures saillantes 106, 107, s'étendant de part et d'autre du plan médian P, et dans une direction parallèle à la direction d'entrée des rainures longitudinales 103 associées aux conducteurs de phase 105, pour constituer les chemins de roulement du chariot mobile de captation. Chaque nervure saillante 106 ou 107 est surmontée d'une paroi saillante 111, de façon à définir deux couloirs parallèles 116 et 117 pour les galets 201, 202 du chariot, et l'on observera que les largeurs de ces deux couloirs sont ici différentes, ce qui est avantageux pour former un détrompeur au montage du chariot mobile de captation. Le profilé de gaine 100 illustré en figure 1 se termine par une paroi centrale 123 surmontée d'une superstructure d'accrochage 114 permettant la prise des griffes d'accrochage 2.

La figure 4 illustre une variante de la section illustrée en figure 1, sans les conducteurs en bande associés. Un tel profilé de gaine 100 comporte plusieurs portions identiques à celles du profilé de la figure 1, lesquelles sont de ce fait affectées des mêmes références, les différences essentielles portant sur l'absence des parois de liaison 112 entre les parois latérales 111 délimitant les rainures longitudinales 103, ce qui permet d'alléger le profil, et de faciliter l'extrusion de celui-ci dans la mesure où l'on utilise moins de matière. Une autre différence réside dans la présence, aux quatre angles du profilé, de rainures circulaires 121 débouchant par une fente 122 du côté extérieur du profilé: ces rainures 121 permettent de recevoir des pions d'alignement (non représentés ici) entre des tronçons de gaine adjacents, ces pions étant insérés par les fentes associées 122, ce moyen étant particulièrement intéressant lorsqu'on utilise une gaine de grande longueur. Il convient également de noter que le contour brisé 120 entre les nervures voisines 119 de deux paires adjacentes présente ici la forme d'un U, ce qui permet d'augmenter encore la ligne de fuite.

La gaine d'alimentation électrique 1 peut être constituée d'une pluralité de profilés de gaine 100 mis bout à bout, chaque conducteur en bande 105 ou 105′ porté par lesdits profilés étant continu sur toute la longueur de ladite gaine.

En variante, la gaine d'alimentation électrique 1 est constituée d'une pluralité de profilés de gaine 100 mis bout à bout, avec des blocs de jonction pour assurer la continuité électrique de l'ensemble des conducteurs en bande 105 ou 105′ entre profilés de gaine adjacents, lesdits blocs étant logés à l'intérieur desdits profilés de gaine, dans l'espace intérieur 115 défini par le contour fermé 101.

L'espace intérieur 115 des profilés de gaine 100 est ainsi utilisé pour recevoir des blocs de jonction au niveau des zones de contact bord à bord entre profilés de gaine adjacents. Il convient toutefois d'observer que cet espace intérieur 115 pourrait être également utilisé pour recevoir un profil rigide cintré, ce qui permet alors de réaliser des profilés de gaine incurvés.

Ainsi que cela est visible sur la figure 5, le bloc de jonction 300 présente des lames de contact cintrées 302, dont les bombements 303 sont appliqués à la manière de lames ressort contre les extrémités recourbées des conducteurs en bande 105 et 105′. Le bloc de jonction 300 présente ainsi autant de lames de contact cintrées 302 qu'il y a de conducteurs en bande 105 ou 105′. Au niveau de la zone d'éclissage, la piste de contact du frotteur 204 en carbone se trouve ainsi escamotée sur une très faible longueur c, qui correspond environ à 7 mm, ce qui implique de choisir un dimensionnement convenable pour le frotteur 204, par exemple une face de contact de 27 x 5 = 135 mm², de sorte que la surface de contact au passage de la zone d'éclissage est égale à 100 mm², ce qui constitue une valeur tout à fait suffisante. On distingue également sur la figure 5 une portion de la tresse de jonction 205 associée à l'un des frotteurs 204.

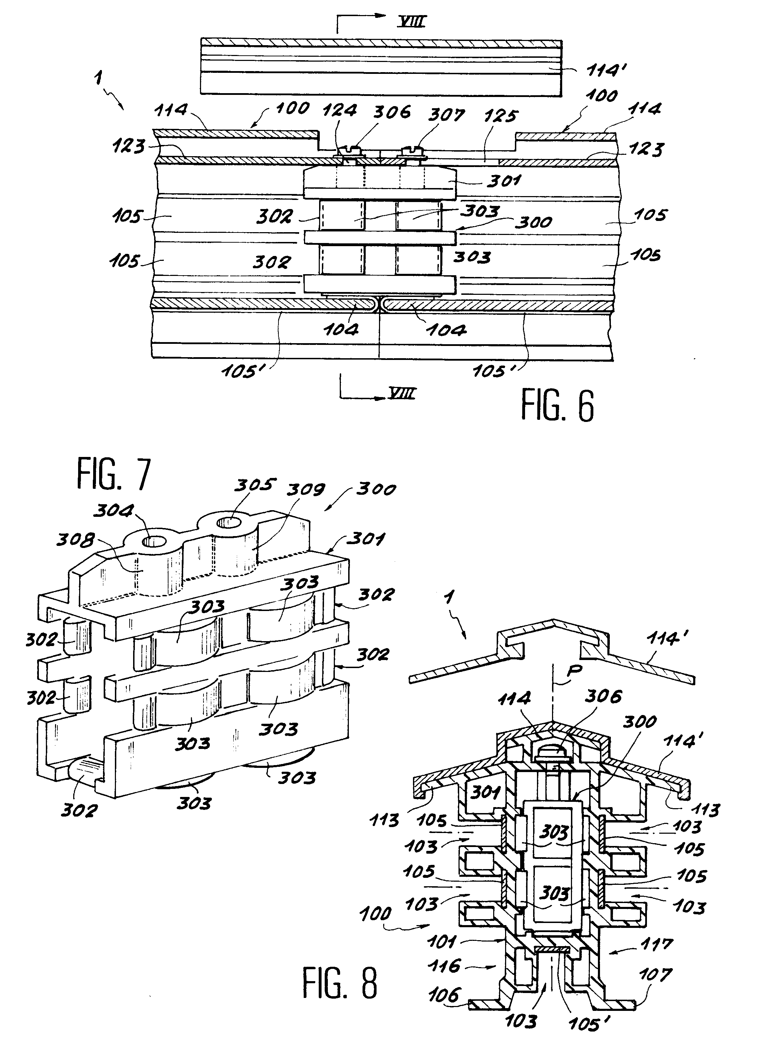

Selon une autre caractéristique de l'invention, chaque bloc de jonction 300 assure également un éclissage mécanique des profilés de gaine 100 concernés. Si l'on se reporte à la figure 7, on distingue mieux la structure du bloc de jonction et d'éclissage 300, qui est constitué par un coprs monobloc isolant 301, sur lequel sont montées des lames de contact cintrées 302 (ici cinq lames de contact), ledit bloc présentant supérieurement deux manchons taraudés 308 et 309 dont les taraudages 304 et 305 permettent d'assurer une fixation par vissage à chacun des deux profilés de gaine concernés 100. Ainsi que cela est visible sur la figure 6, chaque profilé de gaine 100 présente, à une extrémité, un trou rond 124 pour le passage d'une vis de fixation 306, et, à l'autre extrémité, une lumière allongée 125 pour le passage d'une autre vis de fixation 307, cette lumière allongée étant également visible sur la figure 2. En l'espèce, le trou rond 124 et la lumière allongée 125 sont pratiqués dans la paroi supérieure 123 des profilés de gaine 100. La superstructure d'accrochage 114 est alors interrompue dans la zone d'éclissage, de sorte qu'il convient de prévoir un capotage amovible 114′, pouvant se clipser sur le capotage 113 en recouvrant la zone de jonction. La figure 8 illustre ainsi la gaine équipée d'un bloc de jonction et d'éclissage 300, et montre le capotage amovible 114′ dans ses deux positions. Un tel agencement permet de réaliser de façon simple et rapide le démontage d'un profilé de gaine individuel : en effet, après avoir enlevé le capotage mobile 114′, dégageant ainsi la zone de jonction entre deux profilés de gaine adjacents, on procède d'abord au dévissage et à l'enlèvement de la vis 306, puis on débloque légèrement la vis 307 associée à la lumière allongée 305, ce qui permet de faire coulisser vers la droite (sur la figure 6) le bloc de jonction et d'éclissage 300, et ainsi de libérer le tronçon de gauche pour son démontage individuel, sans avoir à démonter les autres profilés de gaine de la ligne. Pour le remontage, on procède aux mêmes opérations dans l'ordre inverse, et on finit par remettre en place le capotage amovible 114′. Il convient d'observer que ces opérations ne nécessitent que la manipulation de deux vis de fixation pour l'ensemble des conducteurs en bande, ce qui représente un progrès important par rapport aux opérations de montage ou de démontage avec les profilés de gaine connus précédemment décrits.

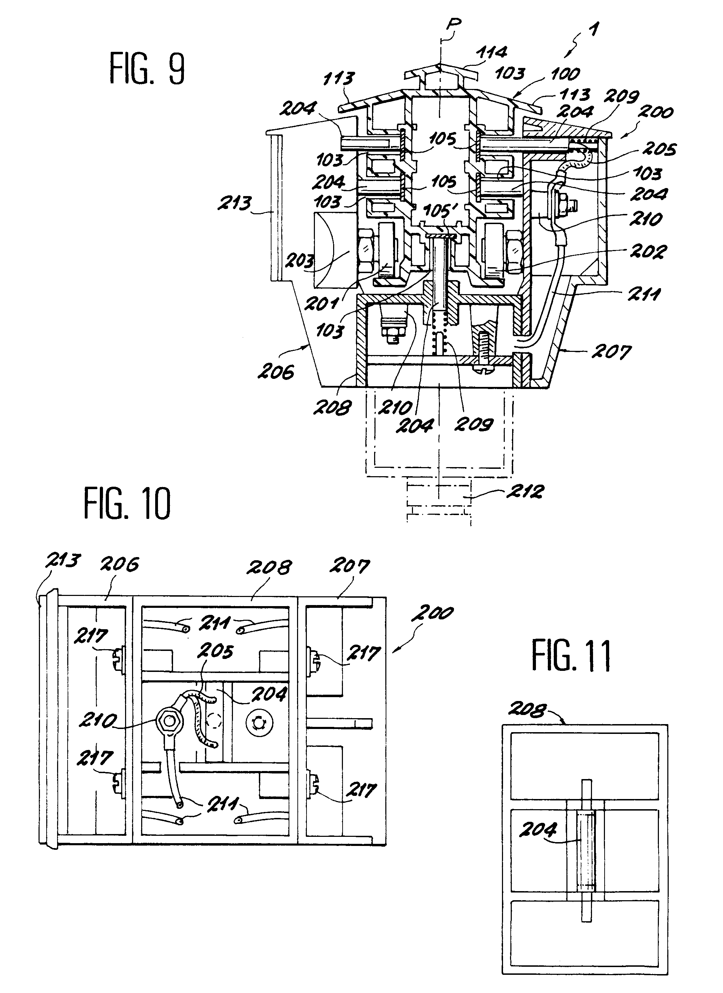

On va maintenant décrire, en référence aux figures 9 à 14, un chariot mobile de captation conforme à l'invention, associé à une gaine d'alimentation électrique du type précédemment décrit.

La vue générale en coupe de la figure 9 permet de bien distinguer une structure du chariot mobile de captation 200, lequel est constitué par deux joues latérales 206, 207 fixées à une pièce centrale 208, de préférence par boulonnage (on distingue des boulons de fixation 217 sur la vue de dessous de la figure 10), ladite pièce centrale 208 passant sous la gaine d'alimentation. Ainsi, les joues latérales 206, 207 et la pièce centrale 208 constituent un ensemble rigide en forme de U venant coiffer par le dessous le profilé de gaine, en s'étendant supérieurement jusqu'au voisinage du capotage 113 dudit profilé, ce qui permet de réaliser une excellente protection des frotteurs 204 et des conducteurs en bande 105 et 105′. Chaque joue 206, 207 porte des frotteurs 204 saillant en direction des conducteurs en bande associés 105 portés par ladite gaine, ainsi que des galets de roulement 201, 202 associés aux chemins de roulement 106, 107 que présente la gaine. La pièce centrale 208 porte quant à elle un frotteur 204 saillant en direction d'un conducteur de terre 105′ porté par la gaine.

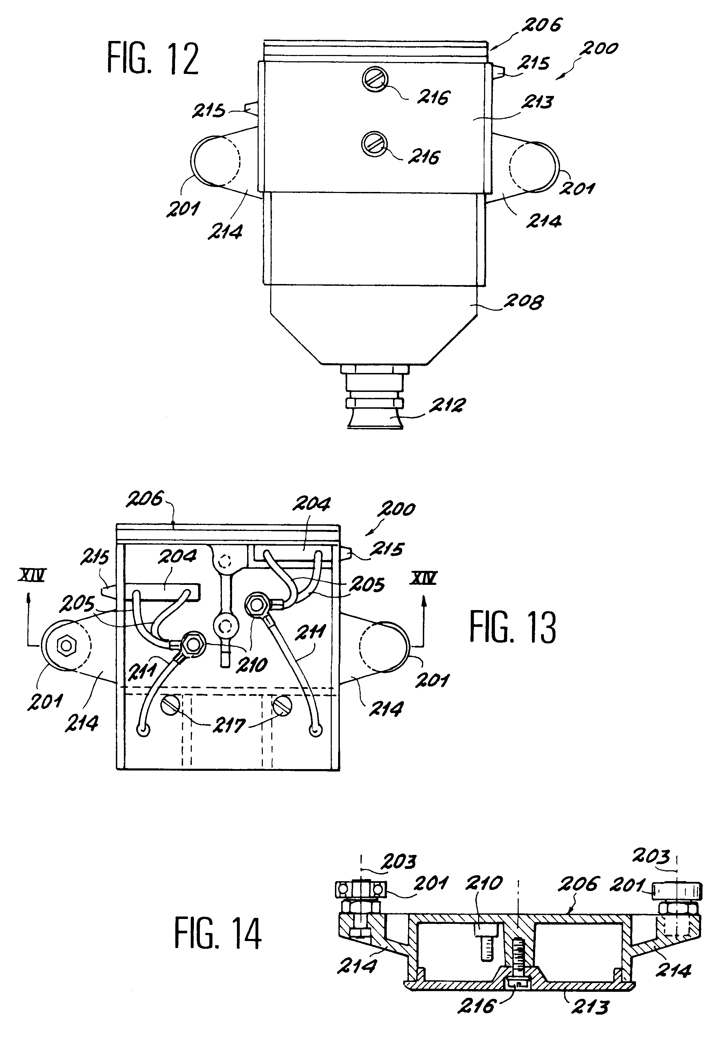

Lorsque la gaine d'alimentation électrique a la forme d'une poutre de section rectangulaire, comme cela est illustré sur la figure 9, les joues 206, 207 sont assemblées à la pièce centrale 208 selon une direction transversale, les frotteurs associés 204 étant agencés parallèlement à cette direction et symétriquement par rapport au plan médian P de ladite gaine. Les frotteurs 204 sont de préférence appliqués contre leur conducteur en bande associé au moyen d'un ressort 209 passant par un alésage borgne pratiqué dans l'axe du frotteur, et l'on distingue également sur la figure 9 la tresse de raccordement 205 associée à l'un des frotteurs 204, menant à une borne de jonction 210, de laquelle part un câble 211 qui sort du chariot mobile de captation 200 par l'intermédiaire d'une portion inférieure de la portion centrale 208 réalisée sous la forme d'un presse étoupe 212. La figure 9 permet également de distinguer un capot amovible 213, fixé par boulonnage sur la joue 206, comme cela est illustré sur la figure 12 (boulons 216). La vue de dessous de la figure 10 permet de distinguer les deux joues 206 et 207 assemblées par les boulons 217 à la portion centrale 208, avec le frotteur 204 qui est associé au conducteur en bande 105′ (conducteur de terre). La figure 10 permet de distinguer les câbles extérieurs 211 associés à chacun des frotteurs du chariot mobile de captation (ici cinq câbles dans la mesure où il est prévu quatre conducteurs de phase et un conducteur de terre).

Les figures 12 à 14 permettent de mieux distinguer la structure et l'agencement de l'une des joues 206 du chariot mobile de captation 200. Les figures 12 et 13 permettent de distinguer des excroissances latérales 215 associées à chacun des deux frotteurs 204 qu'elles portent, de telles excroissances procurant un guidage supplémentaire des frotteurs, en évitant un bras de levier trop long vers l'extérieur. Ces figures permettent également de distinguer les pattes latérales 214 qui supportent les galets de roulement 201 associés à la joue 206 du chariot mobile de captation. La vue de la figure 13 permet de distinguer les tresses 205, la borne de jonction 210, et le câble extérieur 211 associés à chacun des deux frotteurs 204 portés par la joue 206. Le démontage du capot extérieur 213, en enlevant les boulons de fixation associés 216, supprime automatiquement l'action des ressorts 209 associés aux deux frotteurs 204, et permet également l'enlèvement du chariot mobile de captation.

La figure 15 illustre une autre variante, dans laquelle le profilé de gaine 100 est agencé pour recevoir, de chaque côté du plan médian P, un capotage clipsé. Le profilé de gaine présente ainsi, dans sa partie supérieure, deux nervures saillantes 113‴ permettant l'appui de deux capotages de protection 114˝ dont le clipsage est assuré par des rebords longitudinaux rentrants 114‴, et qui se prolongent latéralement vers le bas pour envelopper la portion supérieure du chariot mobile de captation comportant les frotteurs latéraux. On obtient ainsi une meilleure protection contre les poussières et/ou le ruissellement d'eau, ce qui permet une utilisation en extérieur en toute sécurité, sans avoir à craindre les intempéries. Par ailleurs, le profilé de gaine 100 présente deux nervures saillantes 113′ à bord libre recourbé 113˝, de façon à définir deux chemins latéraux de roulement associés à des galets 201′, 202′ d'axe vertical, portés par le chariot mobile de captation 200 : ces galets procurent alors un guidage latéral dudit chariot en partie haute de celui-ci. On pourrait en variante prévoir deux galets d'axe horizontal venant en appui contre les nervures saillantes 113′, et permettant d'écarter tout risque de remontée du chariot mobile de captation. On notera que la gaine d'alimentation électrique illustrée en figure 15 comporte ici non plus deux mais trois conducteurs de phase 105 de chaque côté du plan médian P, et un conducteur de terre 105′ dont la rainure est, comme précédemment, disposée au niveau de la face inférieure du profilé.

La figure 16 illustre encore une autre variante, selon laquelle le profilé de gaine 100′ a la forme d'une poutre de section triangulaire, dont la pointe est tournée vers le bas. Les portions de paroi 104 sont alors inclinées par rapport au plan médian P, et non plus parallèles audit plan comme c'était le cas pour les variantes précédemment décrites. Les frotteurs du chariot doivent dans ce cas être agencés selon deux directions obliques 400, 401, et symétriquement par rapport au plan médian P. Une telle variante procure une bonne rigidité mécanique, et une protection très satisfaisante contre les poussières et/ou le ruissellement, du fait du caractère "rentrant" des rainures longitudinales associées aux conducteurs agencés latéralement (ici deux conducteurs de chaque côté). On notera que les nervures saillantes 113 font partie d'un capotage en forme de toit, qui surplombe en les protégeant les rainures longidutinales latérales. La combinaison de l'inclinaison des ailes du profilé de gaine, et de l'inclinaison des nervures 113 et des parois de rainures 111, est dont ainsi très favorable pour obtenir une protection optimale, ce qui constitue un avantage notable en cas d'utilisation à l'extérieur, malgré la complication qui en résulte pour la structure du chariot mobile de captation.

L'invention n'est pas limitée aux modes de réalisation qui viennent d'être décrits, mais englobe au contraire toute variante reprenant, avec des moyens équivalents, les caractéristiques essentielles énoncées ci-dessus.

## Revendications

**1/** Gaine d'alimentation électrique, notamment pour chariot mobile de pont-roulant ou de palan, comportant au moins un profilé de gaine en matériau électriquement isolant, supportant une pluralité de conducteurs en bande disposés parallèlement à la direction générale dudit profilé, lesdits conducteurs étant agencés pour être contactés par des frotteurs associés portés par un chariot mobile de captation pouvant rouler sur des chemins de roulement solidaires dudit profilé, caractérisée par le fait que le profilé de gaine (100) est réalisé sous forme d'une poutre présentant en section un contour fermé (101), à l'extérieur de laquelle sont organisées d'une part une pluralité de rainures longitudinales (103) au fond de chacune desquelles est disposé un conducteur en bande (105, 105′), la largeur (a) et la profondeur (b) desdites rainures longitudinales étant choisies pour permettre à la fois le passage des frotteurs (204) du chariot mobile de captation et la protection des conducteurs en bande (105, 105′), et d'autre part deux nervures (106, 107) formant les chemins de roulement dudit chariot.

**2/** Gaine d'alimentation électrique selon la revendication 1, caractérisée par le fait que chaque profilé de gaine (100) comporte des rainures longitudinales (103) associées aux conducteurs de phase (105) sur ses faces latérales.

**3/** Gaine d'alimentation électrique selon la revendication 2, caractérisée par le fait que chaque profilé de gaine (100) comporte une rainure longitudinale supplémentaire (103), également du côté extérieur, associée au conducteur de terre (105′), ladite rainure étant de préférence disposée au niveau de la face inférieure dudit profilé.

**4/** Gaine d'alimentation électrique selon l'une des revendications 1 à 3, caractérisée par le fait que les rainures longitudinales (103) ont la forme générale d'un T, dont la branche centrale (108) sert au passage du frotteur associé (204) et dont la branche transversale (109) sert au logement du conducteur en bande correspondant (105, 105′).

**5/** Gaine d'alimentation électrique selon la revendication 4, caractérisée par le fait que la branche transversale (109) de certaines au moins des rainures en forme de T (103) est dimensionnée pour recevoir des conducteurs en bande (105, 105′) d'épaisseurs différentes.

**6/** Gaine d'alimentation électrique selon la revendication 5, caractérisée par le fait que la branche transversale (109′) de certaines au moins des rainures en forme de T (103) présente un profil étagé (110), de façon à recevoir des conducteurs en bande (105, 105′) de largeurs et d'épaisseurs différentes.

**7/** Gaine d'alimentation électrique selon l'une des revendications 1 à 6, caractérisée par le fait que chaque profilé de gaine (100) présente, à ses extrémités libres, une encoche (118) au niveau de ses portions de paroi (104) associées aux rainures longitudinales (103), de façon à pouvoir recourber les extrémités des conducteurs en bande (105, 105′) et amener les extrémités recourbées desdits conducteurs en bande le long desdites portions de paroi, du côté intérieur par rapport au contour fermé (101) dudit profilé de gaine.

**8/** Gaine d'alimentation électrique selon la revendication 7, caractérisée par le fait que le profilé de gaine (100) présente, du côté intérieur par rapport à son contour fermé (101), des paires de nervures (119) en arrière des rainures longitudinales (103), chaque paire de nervures formant butée de positionnement pour les extrémités recourbées du conducteur en bande associé (105, 105′).

**9/** Gaine d'alimentation électrique selon la revendication 8, caractérisée par le fait que les nervures voisines (119) de deux paires adjacentes sont reliées par un contour brisé (120), de façon à augmenter la ligne de fuite entre les extrémités recourbées concernées des conducteurs en bande adjacents (105, 105′).

**10/** Gaine d'alimentation électrique selon l'une des revendications 1 à 9, caractérisée par le fait que chaque profilé de gaine (100) présente un capotage de protection (113) s'étendant de part et d'autre d'un plan médian dudit profilé, de façon à protéger les rainures longitudinales (103) contre les poussières et/ou le ruissellement d'eau.

**11/** Gaine d'alimentation électrique selon l'une des revendications 1 à 9, caractérisée par le fait que chaque profilé de gaine (100) est agencé pour recevoir, de chaque côté d'un plan médian (P) dudit profilé, un capotage clipsé (114˝) qui se prolonge latéralement vers le bas pour envelopper la portion supérieure du chariot mobile de captation (200) comportant les frotteurs latéraux (204).

**12/** Gaine d'alimentation électrique selon l'une des revendications 1 à 11, caractérisée par le fait que chaque profilé de gaine (100) présente supérieurement deux nervures saillantes (113′) à bord libre recourbé (113˝), de façon à définir deux chemins de roulement pour des galets de guidage latéral (201′, 202′), lesdits galets, d'axe vertical, étant portés par le chariot mobile de captation (200).

**13/** Gaine d'alimentation électrique selon l'une des revendications 1 à 12, caractérisée par le fait que chaque profilé de gaine (100) présente inférieurement deux nervures saillantes (106, 107), s'étendant de part et d'autre d'un plan médian (P) dudit profilé, et dans une direction parallèle à la direction d'entrée des rainures longitudinales (103) dudit profilé, pour constituer les chemins de roulement du chariot mobile de captation (200).

**14/** Gaine d'alimentation électrique selon la revendication 13, caractérisée par le fait que chaque nervure saillante (106, 107) est surmontée d'une paroi saillante (111), de façon à définir deux couloirs parallèles (116, 117) pour les galets (201, 202) du chariot (200), les largeurs desdits couloirs étant différentes pour former un détrompeur au montage dudit chariot.

**15/** Gaine d'alimentation électrique selon l'une des revendications 1 à 14, caractérisée par le fait que chaque profilé de gaine (100) a la forme d'une poutre de section rectangulaire.

**16/** Gaine d'alimentation électrique selon l'une des revendications 1 à 14, caractérisée par le fait que chaque profilé de gaine (100′) a la forme d'une poutre de section triangulaire, dont la pointe est tournée vers le bas, les portions de paroi (104) associées aux rainures longitudinales latérales (103) étant alors inclinées par rapport au plan médian (P) dudit profilé, et les frotteurs (204) du chariot (200) étant agencés selon deux directions obliques (400, 401) et symétriquement par rapport audit plan médian.

**17/** Gaine d'alimentation électrique selon l'une des revendications 1 à 6 et 10 à 16, caractérisée par le fait qu'elle est constituée d'une pluralité de profilés de gaine (100) mis bout à bout, chaque conducteur en bande (105, 105′) porté par lesdits profilés étant continu sur toute la longueur de ladite gaine.

**18/** Gaine d'alimentation électrique selon les revendications 1 et 7, et l'une des revendications 2 à 6 et 8 à 16, caractérisée par le fait qu'elle est constituée d'une pluralité de profilés de gaine (100) mis bout à bout, avec des blocs de jonction (300) pour assurer la continuité électrique de l'ensemble des conducteurs en bande (105, 105′) entre profilés de gaine adjacents, lesdits blocs étant logés à l'intérieur desdits profilés de gaine.

**19/** Gaine d'alimentation électrique selon la revendication 18, caractérisée par le fait que chaque bloc de jonction (300) présente extérieurement des lames de contact cintrées (302) associées à chaque conducteur en bande (105, 105′) porté par les profilés de gaine adjacents (100) concernés.

**20/** Gaine d'alimentation électrique selon la revendication 18 ou 19, caractérisée par le fait que chaque bloc de jonction (300) assure également un éclissage mécanique des profilés de gaine (100) concernés.

**21/** Gaine d'alimentation électrique selon la revendication 20, caractérisée par le fait que chaque bloc de jonction et d'éclissage (300) présente supérieurement deux manchons taraudés (308, 309) pour une fixation par vissage à chacun des deux profilés de gaine concernés (100), la zone de jonction étant recouverte par un capotage amovible (114′).

**22/** Gaine d'alimentation électrique selon la revendication 21, caractérisée par le fait que chaque profilé de gaine (100) présente, à une extrémité, un trou rond (124) pour le passage d'une vis de fixation (306), et, à l'autre extrémité, une lumière allongée (125) pour le passage d'une autre vis de fixation (307), de façon à autoriser un coulissement des blocs de jonction et d'éclissage (300) en vue du démontage d'un profilé de gaine individuel.

**23/** Chariot mobile de captation (200) associé à une gaine d'alimentation électrique selon l'une des revendications 1 à 22, caractérisé par le fait qu'il est constitué par des joues latérales (206, 207) fixées à une pièce centrale (208) passant sous la gaine d'alimentation (1, 100), chaque joue (206, 207) portant des frotteurs (204) saillant en direction des conducteurs en bande associés (105) portés par ladite gaine, ainsi que des galets de roulement (201, 202) associés aux chemins de roulement que présente ladite gaine, et la pièce centrale (208) portant un frotteur (204) saillant en direction d'un conducteur de terre (105′) porté par ladite gaine.

**24/** Chariot mobile de captation selon la revendication 23, associé à une gaine (1) ayant la forme d'une poutre de section rectangulaire, caractérisé par le fait que les joues (206, 207) sont assemblées à la pièce centrale (208) selon une direction transversale, les frotteurs associés (204) étant agencés parallèlement à cette direction et symétriquement par rapport à un plan médian de ladite gaine.
